# EUROPEAN PATENT APPLICATION

(11) **EP 2 538 380 A1**
(43) Date of publication of application: **26.12.2012**
(21) Application number: 11177072.3
(22) Date of filing: 10.08.2011
(51) Int. Cl.: G06Q 10/10

(54) **Apparatus, and associated method, for locating a message using graphical interface**

(30) Priority: 20.06.2011 US 163980
(71) Applicant: Research In Motion Limited, Waterloo, ON N2L 3W8 (CA)
(72) Inventor: Martin, Daryl Joseph, Waterloo, Ontario N2L 3W8 (CA)
(74) Representative: Noble, Nicholas

(57) **Abstract**

An apparatus, and an associated method, facilitates searching for a message of interest from amongst a plurality of stored messages, such as email messages received at, or sent by, a wireless device and for organizing the stored messages. A plot is generated and displayed. The plot is a representation of the messages, plotted as a function of alphanumeric identifiers of an address associated with each of the messages. Selection is made to zoom in on a portion of the plot to display portions or sub-portions of the plot. Selection of which portions to view is made to locate the message of interest. The message of interest is located by zooming in to the message through successive input commands, such as touch commands input at an interactive screen display.

## Description

The present disclosure relates generally to a manner by which to search for a message of interest, such as an email message, from amongst a plurality of stored messages. More particularly, the present disclosure relates to an apparatus, and an associated method, by which to graphically display a plot representative of the plurality of stored messages and providing for locating of the message of interest through entry of multi-touch, or other, commands to zoom in on the plot until the selected message is located.

Input, touch commands entered, e.g., by way of a touch screen at which the plot is displayed, cause successively magnified portions of the plot to be displayed until the message of interest is located. Conventional scrolling through a long listing of the messages is obviated.

### Background

Advancements in digital communication techniques have permitted the development, deploynnent, and widespread usage of communication systems that utilize digital communication techniques. Information that is communicated using a digital communication technique typically is placed in digital form and then formatted, such as in data packets that can be communicated at discreet intervals or bursts, by a sending station upon a communication channel. When delivered to a destination station, the informational content of the transmitted information is recovered. Digital communication techniques typically provide for more efficient communication of information for the reason that redundancies can be removed from information prior to transmission of the information. The bandwidth required for communication of the information thereby is reduced.

Computer stations connected together in a network arrangement typically provide for the communication of data between different ones of the computer stations. Data generated during execution, or other operation, of an application at one computer station is provided to another of the computer stations by way of the network connection formed between the computer stations. Networks include both local area networks and wide area networks, some of which are private networks that have limited access and public networks, such as the internet, that form public-access networks. Applications that provide for the communication of data between computer stations include email applications and other data messaging applications. Email applications typically provide for the storage of both received messages as well as for storage of copies of sent messages.

Over time, large numbers of sent and received messages are sometimes stored. The stored messages are typically available for later retrieval and viewing.

Networked connections between the computer stations are not limited to wire line connections. Networked connections are also available by way of radio connections, i.e., connections defined by communication channels upon which data messages are communicated between sending and receiving stations. Wireless devices, such as wireless devices operable in cellular and cellular-like communication systems, sometimes include functionality permitting the sending and receiving of email and other data messages. Operation of data-message-capable wireless devices is analogous to operation of computer stations that utilize data-messaging applications. Messages received at such a wireless device and copies of message sent by such a wireless device are stored at the wireless device, available for subsequent retrieval and viewing. And, over time, potentially large numbers of messages are also stored at a data-message-capable wireless device.

To maintain the portability of a wireless device, significant dimensional constraints are imposed. User interface elements of a wireless device are correspondingly constrained. A display screen of a wireless device is, for instance, often times of less than two inches in lengthwise and widthwise dimensions. While the screen of a wireless device is typically significantly smaller than a screen utilized by a computer station, screen displays generated during operation of an email or other data message application at a wireless device is typically similar to the screen displays generated at a conventional computer station when performing corresponding email or other data message applications.

Due to the small sizes of the screens, the various interactive operations performed during operation of an email or other data message applications are more difficult. For instance, a search for a particular message from amongst a plurality of stored messages is sometimes difficult at a computer work station but even more so at a wireless device having a small screen. Conventionally, when a user searches for a message, the user scrolls through all of the messages, indexed, either by time or alphabetically, until the message of interest is located.

When using a small-sized screen, there is an increased possibility that the message of interest is not noticed, and scrolling through the plurality of messages to locate the message of interest must be performed more than one time to locate the message of interest.

An improvement to this existing scheme would therefore be beneficial.

It is in light of this background information related to message searching that the significant improvements of the present disclosure have evolved.

### Brief Description of the Drawings

Figure 1 illustrates a functional block diagram of a communication system in which an implementation of the present disclosure is operable.

Figure 2 illustrates an exemplary display generated during operation of an implementation of the present disclosure.

Figure 3 illustrates another exemplary display generated during operation of an implementation of the present disclosure.

Figure 4 illustrates another exemplary display generated during exemplary operation of an implementation of the present disclosure.

Figure 5 illustrates a process representative of the process of operation of an implementation of the present disclosure.

Figure 6 illustrates a method flow diagram representative of the method of operation of an implementation of the present disclosure.

### Detailed Description

The present disclosure, accordingly, advantageously provides an apparatus, and an associated method, by which to search for a message, such as an email message, from amongst a plurality of stored messages.

Through operation of an implementation of the present disclosure, a manner is provided by which to graphically display a plot representative of the plurality of stored messages and to provide for location of a message of interest through entry of multi-touch, or other, commands to zoom in on the plot until the selected message is located.

In one aspect of the present disclosure, input, touch commands are entered by way of a touch screen at which the plot is displayed and cause successively magnified portions of the plot to be displayed until the selected message is located. Conventional searching for a message by scrolling through a listing of messages is obviated.

In another aspect of the present disclosure, data representative of messages, such as received messages, sent messages, and draft messages, are maintained at a message store or database. The message data is organized as a plot of message-information density as a function of alphanumeric identification. The plot includes a first, e.g., horizontal, axis that is alphabetically scaled, i.e., having letters A-Z or at least a subset thereof. A second axis, e.g., the vertical axis, is scaled in terms of the number of messages associated with each of the first- axis alphabetical identifiers. If numerical identifiers are further scaled along the first axis, messages associated with the numerical identifiers are also scaled along the second axis. The plot is representative, thereby, of all of the messages of a group of messages. For example, the plot is representative of all received messages, representative of a plot of all sent messages, representative of a plot of all draft messages, or representative of a plot of all stored messages.

In another aspect of the present disclosure, the plot is displayed upon a display screen, such as upon the display screen of a portable wireless device. The display screen is, e.g., part of a touch screen display providing for interactive input by a viewer responsive to display at the display element, or is otherwise part of a graphical user interface that alternately utilizes any of various types of input elements, such as a track pad, trackball, etc.

In another aspect of the present disclosure, when a search is to be made of a message, the searcher, e.g., the user of the device, commences searching operations by causing formation and display of the plot. The searcher then elects to zoom in on a portion of the displayed plot. The portion comprises any selectable portion of the plot, for instance, a plot portion including several of the alphabetical or numerical indicators scaled along the first axis. Or, e.g., a selection is made to display a plot portion of only a single alphabetical or numeric identifier in greater detail. Or, selection is directly made to display only a portion of the information related to the single alphabetical or numeric indicator.

When the display comprises an interactive display, such as a touch screen, the searcher makes selection by touching the screen or otherwise causing inputs to be generated in an interactive manner with information displayed on the display screen of an output element. By providing the searcher with the opportunity to zoom in on a portion of the plot, in a single touch screen input, or other input command, the searcher is able quickly to narrow a search window in the search for a message of interest.

In another aspect of the present disclosure, the selection made by the searcher causes generation of a subsequent view that displays the plot portions selected by the searcher. The new display is provided to the output element, and the searcher is able again to view the display and make further selection further to zoom into the plot, that is, to select display of a sub-portion of the plot. By selecting the display of the sub-portion of the plot, such display provides greater detail of the plot. That is to say, the finer granularity of the plot is displayable.

In another aspect of the present disclosure, at each alphabetical or numeric indicator scaled along the first axis, a bar, or other geometric identifier identifies each message identified by the associated identifier. And, when the bar or geographic identifier is viewed in finer granularity, the identifications of individual messages are discernable. The messages are listed, e.g. in temporal order from newest to oldest or vice versa. And, the messages are, if desired, further sorted by message thread. By appropriate magnification, i.e., zooming in, the searcher is able to locate the message of interest.

Thereby, the searcher, through entry of touch commands on a touch screen, or other interactive input entries to zoom into locations of interest, a message of interest is located without requiring a searcher to scroll through the messages to locate the message of interest. Quicker, more convenient, and more intuitive searching or browsing is provided.

In these and other aspects, therefore, an input apparatus, and an associated method, is provided for facilitating organizing selected message data at an electronic device. A message information organizer is configured to organize stored message data representable as a plot of message-information density as a function of alpha numeric identification. A display generator is configured to cause generation of a display comprising at least a portion of the plot into which the message information organizer organizes the message at a selected magnification level.

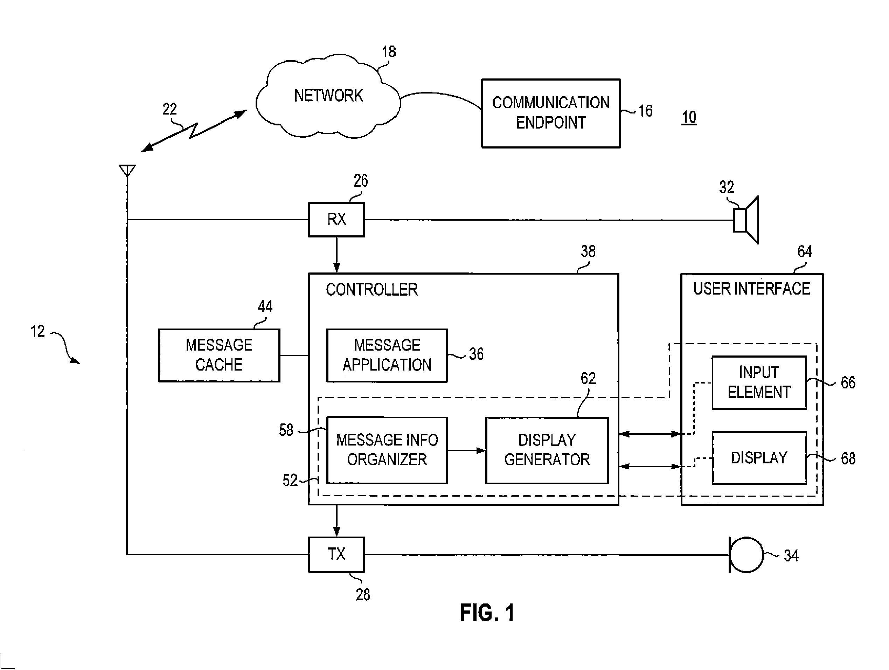

Referring first to Figure 1, a communication system, shown generally at 10, provides for communications between communication stations, here between a wireless device 12 and a communication endpoint (CE) 16. In the exemplary implementation, the communication system 10 forms a wireless communication system such as a cellular communication system or analogous communication system that provides for communications by way of radio channels. The illustrated implementation is, however, merely exemplary. In other implementations, the communication system is of other types and constructions. For example, the communication system 10 is alternately implemented as a wired network having physical connections interconnecting the communication stations. While the following description of exemplary operation shall be described with respect to the illustrated implementation, it should be understood that the teachings of the present disclosure are analogously implementable in other types of communication systems.

The communication system includes a network part 18 representative of both a radio access network and a data network or other core network. A radio air interface, represented by the arrow 22, is formed between the network 18 and the wireless device. Radio channels are defined upon the radio air interface. Data originated at the wireless device 12 is delivered to the communication endpoint 16 by way of radio channels defined upon the radio air interface and the network 18. And, analogously, data originated at the communication endpoint 16 for delivery to the wireless device 12 is routed by way of the network 18 and upon radio channels defined upon the radio air interface for delivery to the wireless device.

In the exemplary implementation, the wireless device is configured to communicate data messages, such as email messages generated pursuant to interaction with, and operation of, an email application. In conventional manner, a data message is created at a communication device, such as through entry of textual information by way of an input keypad or keyboard to compose the message that, once formed, is communicated between the communication stations.

Data messages originated at the communication endpoint 16 are communicated to the wireless device 12 and received at the receive part 26. And, data messages originated at the wireless device 12 are provided to the transmit part 28 communication to the communication endpoint 16. The wireless device is further shown to include a data sink 32 coupled to the receive part 26 and a data source 34 coupled to the transmit part 28. The data sink and source 32 and 34 are representative of transducers, such as a speaker and a microphone, used during operation of the wireless device during voice communications. Entry of textual information pursuant to generation of an email or other data message as well as operation upon a received email or other data message is carried out in conjunction with operation of a message application 36, here embodied at a controller 38. The message application 36 operates upon received messages received at the receive part 26 and provides outgoing messages to the transmit part 28. The message application 36 also causes storage of messages at a message memory or cache 44.

As mentioned previously, a large number of messages, over time, might be sent and received. A user of the wireless device might wish to refer to an earlier-communicated and -stored message. Conventional searching for the message of interest is typically carried out by causing display of a listing of messages, such as messages listed in an email message inbox or an email message outbox. Then, once displayed, the user scrolls through the list to locate the message of interest. Particularly when carried out at a portable device, such as the wireless device, this search procedure can be cumbersome.

The device 12 further includes an apparatus 52 of an implementation of the present disclosure that facilitates search for a message of interest. The apparatus 52 is functionally represented, formed of elements that are implemented in any of various manners. For instance, the elements are implemented as hardware devices, firmware devices, software devices comprising code executable by processing circuitry, and combinations thereof.

Here, the apparatus 52 includes a message information organizer 58, a display generator 62, and a user interface 64. In the exemplary implementation, the message information organizer 58 and the display generator 62 are embodied at the controller 38 and comprise control functions performed thereat. The user interface 64 includes an input element 66 and an output element comprising a display 68. In the exemplary implementation, the user interface comprises a touch screen or other interactive display in which inputs are entered by touching the screen at selected locations, such as in response to specific screen displays. That is to say the user interface comprises a graphical user interface that includes any appropriate input element, such as a trackball, track pad, the aforementioned touch screen, etc.

The input commands, instructions, and information are entered by way of the input element 66 pursuant to operation of the wireless device to send an email or other data message as well as pursuant to various operations taken with respect to a message received at the device. And, input commands are entered by way of the input element to invoke operation of the message application 36.

Subsequent to invocation of operation of the message application, or otherwise when the user of the device 12 elects to search for a message of interest, the user enters an appropriate input command at the input element of the user interface 64. The messages are of any type, including, e.g., email messages, instant messages, and SMS (Short Message Service) messages. The input command is provided to the controller and causes the message information organizer 58 to generate a plot utilizing message-data information of messages stored at the message cache 44. The plot that is caused to be generated by the message information organizer is of message-information-density plotted as a function of alphanumeric identification. The density is defined in any manner including, e.g., by a message count. And, the plot information is provided to the display generator, which causes display of the plot at the display 68 formed of the output element of the user interface.

Subsequent to display at the display 68, the user of the device 12 is able to zoom in on any portion of the plot by way of input commands provided to the input element, such as touch commands that are interpreted to zoom in on particular sections of the plot. Received instructions cause the message information organizer to form plot-portions or sub-plot-portions that the display generator causes to be displayed at the display 68. And, by zooming in to the plot, the message of interest is locatable through appropriate input selection to cause zooming-in to the appropriate portion of the plot. Because the user does not need to scroll through an entire listing of messages, the message of interest is able to be located more quickly, and in an intuitive manner, than conventionally permitted when utilizing a scrolling operation.

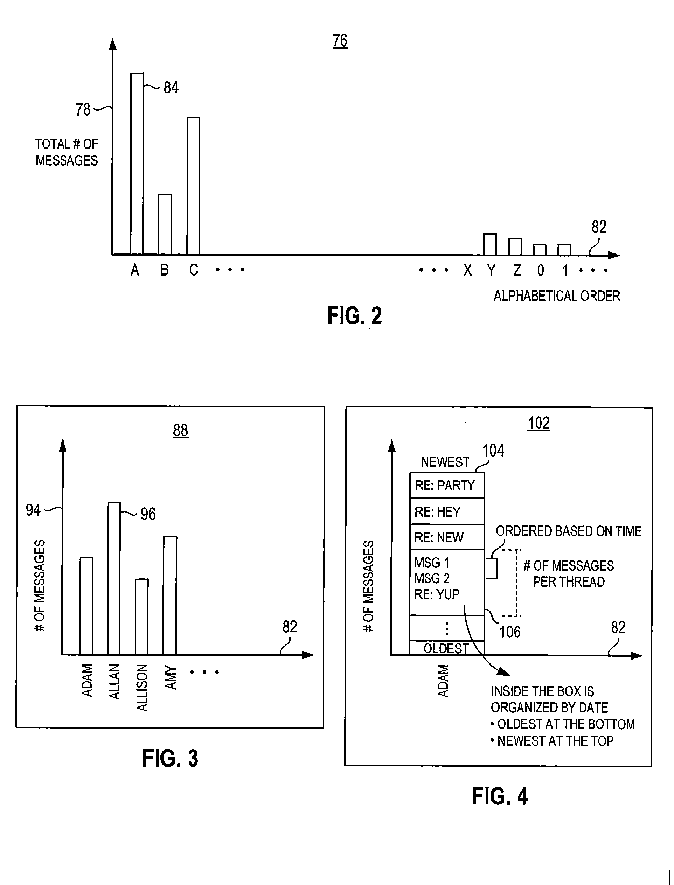

Figure 2 illustrates an exemplary plot 76 generated pursuant to operation of the apparatus 52. The plot shows message density, e.g., a message count, along the vertical axis 78 as a function of alphanumeric identifiers scaled along the horizontal axis 82. The plot here forms a bar chart with entries associated with the alphanumeric identifiers A - Z and 0 - 9, scaled along the horizontal axis 82. The height of each bar is dependent upon the number of messages associated with each of the letters. For a search of received messages, for example, the height of each of the bars 84 is representative of the number received messages from a sender an address starting with, or otherwise associated with, the associated letter. Larger bars are indicative of greater numbers of messages received from senders that have addresses starting with the associated letter than bars of smaller heights associated with other alphanumeric identifiers. A user searching for a message of interest elects to display a portion of the plot 76. In other implementations, plots are formed in other, e.g., formatted as functions of other variable manners. The horizontal axis is, e.g., alternately sealed by message or thread subject.

And, in other implementations, the plot is displayed n a different manner. For example, in one implementation, a bubble plot is utilized. In one such a bubble plot, a circle represents a letter, and the size of the circle represents a message count or other density indication. At a finest level of zoom, each circle represents a thread with a particular person and icon located with the circle representing an urgency and message attachments.

Figure 3 illustrates a plot 88 representative of an exemplary portion of the plot 76 elected to be shown in finer granularity, i.e., magnified. Here, by way of example, the user elects to search amongst the messages from senders having addresses starting with, or otherwise associated with, the letter 'A'. And, the plot 88 plots the number of messages of different addresses, each starting with the letter 'A'. Here, the horizontal axis 92 is scaled with different address names of messages starting with the letter 'A'. And, the vertical axis 94 is scaled in terms of numbers of messages. Each bar 96 is of a height responsive to the number of messages associated with each address name.

Once displayed, the user is able to zoom in on a portion of the plot 88, i.e., a sub-portion of the original plot 76, shown in Figure 2. Again, the user enters the commands by way of touch inputs at the input element 66.

By way of example, the user elects to see in finer granularity messages associated with the name `Adam'. The plot 102 shown in Figure 4 is caused to be generated responsive to input commands generate by the user by way of the input element that is provided to the message information organizer that, in turn, organizes the message data, and the display generator causes generation of the plot 102. The plot 102 identifies the messages associated with the sender 'Adam'. The messages in the bar 104 are listed from newest, i.e., most-recent to oldest, i.e., most distant in time. In the exemplary implementation, messages within a thread are also listed, indicated by the bar portion 106. The user is able to make a further selection from the plot 102. The user is able, for example, to select display in finer granularity of a portion of the bar 104. Or, the user is able to select a message for viewing if the message of interest is located in the bar 104. The user, for example taps a portion of the bar to bring up the message text. IN one implementation, a touch.-and-hold operation causes a preview to be displayed. In one implementation, the messages are color-coded, indicative of whether the messages have been previously read or accessed. For example, unread messages can be colored brightly *(e.g.,* red), while read messages can be colored dimly *(e.g.,* grey). Other message properties, such as importance, urgency, presence of an attachment, etc can also be indicated by different colors in the bar 104.

Thereby, through a series of touch, or other, input commands, the message of interest is located. A plot is displayed and a successive series of plot portions and sub-plot portions are displayed responsive to selection by the user in order to locate a message of interest.

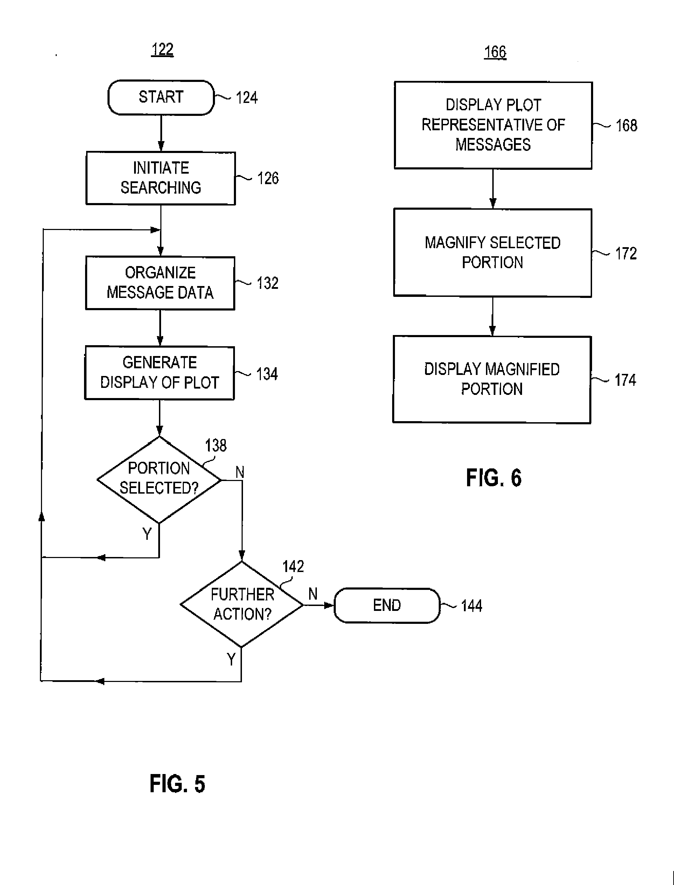

Figure 5 illustrates a process, shown generally at 122, representative of the process of operation of an implementation af the present disclosure. The process facilitates searching for a message amongst a plurality of messages at a device, such as the wireless device 12 shown in Figure 1.

After entry, indicated by the start block 124, search operations are initiated at the block 126. Search operations are initiated responsive to a search initiation command entered by a user. Additional input instructions are provided, such as whether the search is to be performed upon received messages, sent messages, draft messages, all messages, etc. In response, message information is retrieved and organized, indicated by the block 132. The message information is organized to form a plot of the message data. Then, and as indicated by the block 134, a display is caused to be generated.

Thereafter, a determination is made, indicated by the block 138, as to whether a portion of the displayed plot is selected to be viewed in finer granularity. If so, the yes branch is taken back to the block 132 and the message information is further organized pursuant to the selection.

If the user does not select to see a portion of the displayed plot in greater detail, a determination is made at the decision block 142 as to whether further action is to be taken. If not, the no branch is taken to end. Otherwise, the yes branch is taken and the further action is undertaken.

Figure 6 illustrates a method flow diagram 166 representative of the method of operation of an implementation of the present disclosure. The method facilitates searching for a message from a plurality of stored messages.

First, and as indicated by the block 168, a plot representative of the plurality of messages is displayed. The plot includes listings of messages plotted as a function of alphanumeric identification. Then, and as indicated by the block 172, a selected portion of the plot is magnified. And, as indicated by the block 174, the selected portion is displayed, once magnified.

Thereby, a manner is provided by which to facilitate searching for a message of interest from a plurality of messages.

Presently preferred implementations of the disclosure and many of its improvements and advantages have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for facilitating organization of selected message data at an electronic device, said apparatus comprising:
a message information organizer configured to organize stored message data representable as a plot of message-information density as a function of alphanumeric identification; and
a display generator configured to cause generation of a display comprising at least a portion of the plot into which said message information organizer organizes the message at a selected magnification level.

2. The apparatus of claim 1 wherein said display generator is further configured to be provided with an indication of the selected magnification level.

3. The apparatus of claim 2 wherein said display generator is further configured to be provided with an indication of a plot-portion of interest and wherein said display generator is configured to cause generation of the display comprising at least the plot-portion of interest.

4. The apparatus of claim 1 wherein said display generator is configured to cause generation of a plurality of displays, each display comprising at least a portion of the plot, and each display of a portion of the plot at a selected magnification level.

5. The apparatus of claim 4 wherein different ones of the plurality of displays of the portions of the plot caused to be displayed by said display generator are displayed at different selected magnification levels.

6. The apparatus of claim 1 further comprising a display screen configured to display the display caused to be generated by said display generator.

7. The apparatus of claim 6 further comprising an input element configured to receive an input selection that defines the selected magnification level.

8. The apparatus of claim 1 wherein the message data comprises e-mail message data and wherein said message information organizer is configured to organize stored email data.

9. The apparatus of claim 1 wherein said message information organizer is configured to organize stored email message data representable as a plot of message information density as a function of email address name indicia.

10. The apparatus of claim 9 wherein the email message data representable as the plot of message data, further is representable as a plot of alphabetical identification of the email address name indicia.

11. The apparatus of claim 1 further comprising a selector configured to provide for selection of a more detailed display of a portion of the at least the portion of the display caused to be generated by said display generator.

12. The apparatus of claim 11 wherein the electronic device comprises a hand held device of reduced screen size and wherein the plot comprises a plurality of messages.

13. A method for facilitating organization of selected message data at an electronic device, said method comprising:
organizing stored message data representable as a plot of message-information density as a function of alphanumeric identification; and
causing generation of display comprising at least a portion of the plot, organized during said organizing, at a selected magnification level.

14. The method of claim 13 further comprising receiving selection of the selected magnification level.

15. The method of claim 13 further comprising receiving selection of an indication of a plot-portion of interest and wherein said causing generation comprises causing generation of the display comprising at least the plot-portion of interest.
